# EUROPEAN PATENT APPLICATION

(11) **EP 0 733 518 A1**
(43) Date of publication of application: **25.09.1996**
(21) Application number: 96301952.6
(22) Date of filing: 21.03.1996
(51) Int. Cl.: B60R 21/22

(54) **Side impact airbag installation**

(30) Priority: 23.03.1995 US 409346
(71) Applicant: MORTON INTERNATIONAL, INC., Chicago, Illinois 60606 (US)
(72) Inventor: Saderholm, Davin G., Salt Lake City, Utah 84103 (US); Smith, Bradley W., Ogden, Utah 84401 (US); Storey, Kirk J., Farmington, Utah 84025 (US); Bunker, S. Mark, Ogden, Utah 84414 (US); Olson, Brent K., Clearfield, Utah 84015 (US); Pierotti, L. John, Huntsville, Utah 84317 (US); Green, David J., Brigham City, Utah 84302 (US); Wesoloski, Andrew G., Fenton, MI 48430-2205 (US)
(74) Representative: Bankes, Stephen Charles Digby

(57) **Abstract**

A vehicle arm rest (14) is pivotably attached to the back of a vehicle seat and accommodates an air bag module comprising a folded air bag and an inflator (36) in a reaction canister (26). A skin (24) encapsulating the air bag module has tear lines to facilitate deployment of the air bag into a space between the arm rest (14) and either an occupant in the seat or the adjacent side of the vehicle. The arm rest (14) may be drivable by an electric motor between raised and lowered positions automatically in response to door switch and vehicle ignition signals.

## Description

This invention relates to automotive airbag restraint systems. More particularly, it relates to a side impact airbag restraint system especially adapted for vans and similar vehicles.

Inflatable devices for restraining occupants of automotive vehicles during frontal collisions are well known. Commonly known as "airbags", they are inflated rapidly in response to a collision. An inflated airbag provides a cushioning restraint, preventing the vehicle occupant from making harmful contact with the steering wheel, instrument panel, or windshield. Although very useful in frontal collisions, such installations are of little help in side impact collisions. In side impacts, the occupant is exposed to possible injurious contact with the door, windows, or other elements forming the sides of the vehicle interior.

It has been proposed to utilize airbags for absorbing energy produced by side impacts. Examples of such proposals will be found in U.S. Patent 5,324,072 of Olson et al. and in the prior art cited therein. Essentially, these proposals involve airbags which are installed within the doors of a vehicle. Such installations are quite effective. However, there is one class of vehicle in which they are less effective. These are vehicles which have "captain's chair" seating such as vans wherein, typically, the driver and front seat passenger seats have arm rests which are integral with the seat's back. Typically, such arm rests are rotatable between a horizontal position for use as an arm rest and a vertical position allowing unimpeded entrance and exit of the vehicle. The arm rest may be rotated manually or automatically upon opening of a door.

In vehicles of this type, a side airbag mounted in the door, B-pillar, or seat back may interact adversely with the arm rest. This is due, at least in part, to the fact that the location of the arm rest is not readily ascertainable. It may be in the raised position customary for travelling, or in the lowered position for entering or leaving the vehicle.

Accordingly, it is a primary object of the present invention to provide an airbag installation having known inflation characteristics during side impact collisions. Other objects, features, and advantages will become apparent from the following description and appended claims.

In accordance with the present invention, an airbag module is located within the arm rest of a seat having an integral arm rest.

The invention will now be described by way of example only with reference to the accompanying figures in which:
FIG. **1** is a side view of a passenger seat having an arm rest raised in the conventional travel position, an inflated airbag being shown in phantom;
FIG. **2** is a front view of the seat of FIG. **1**, including the side door of a vehicle;
FIG. **3** is an illustration similar to FIG. **1** showing the arm rest in a lowered position;
FIG. **4** is an illustration similar to FIG. **2** showing the airbag in an alternative location;
FIG. **5** is a top view of an arm rest incorporating the invention, partially broken away to illustrate its internal construction;
FIG. **6** is an elevational view of the arm rest of FIG. **5**;
FIG. **7** is a cross section taken substantially along the line **7-7** of FIG. **5**; and
FIG. **8** is a circuit diagram illustrating one means for automatically rotating the arm rest.

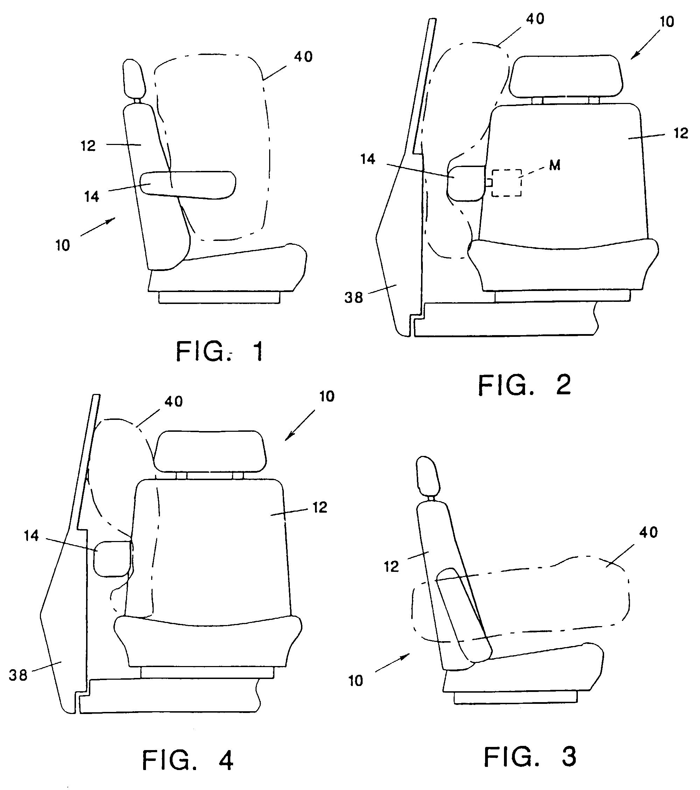

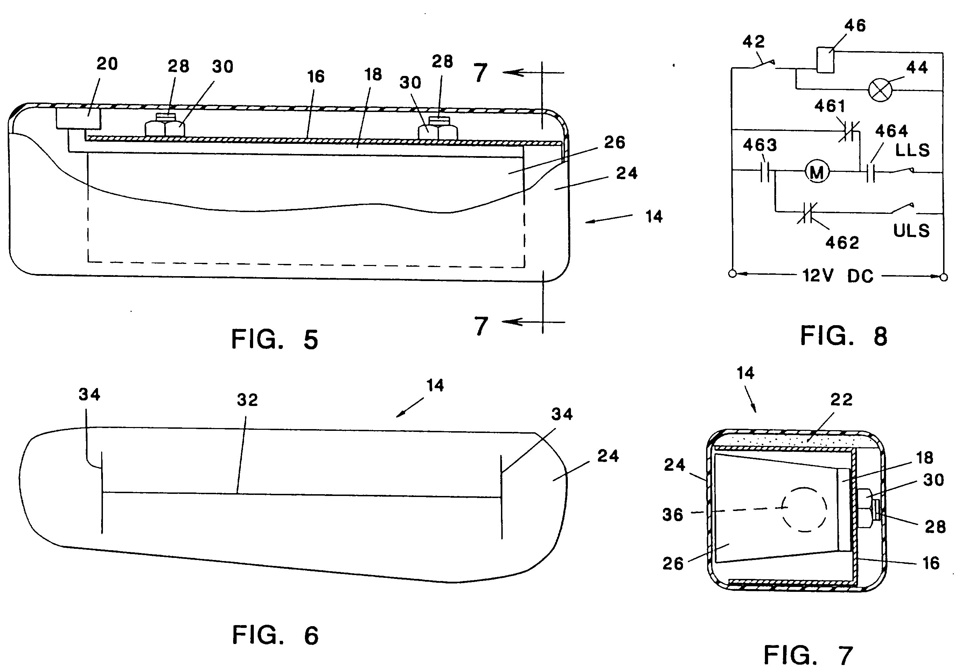

FIGS. **1** to **3** illustrate a passenger side seat **10** having a seat back **12** upon which is mounted an integral pivoted arm rest **14**. The arm rest **14** may be pivoted between a horizontal position as illustrated in FIGS. **1** and **2** for normal highway travel and a lowered position as illustrated in FIG. **3** permitting unimpeded access and exiting of the vehicle. In accordance with the present invention, an airbag module is incorporated into the arm rest. As illustrated in FIGS. **5** to **7** the arm rest **14**, which can be a substantially box-shaped housing attached to seat **10** adjacent one side of the vehicle, includes internal supporting structure such as a channel **16** mounted on an arm **18** extending from a pivot **20**. The attachment of the pivot **20** to the seat back is conventional and, accordingly, is not shown. The pivot may include motorized or other mechanical means to ensure that the arm rest is positioned properly when the occupant, such as a passenger or driver, has become seated and closed the door of the vehicle so that the airbag will deploy properly. If the arm rest **14** is motorized, it may be driven by a motor **M** housed within the seat back to rotate between the exit/entrance position. A suitable drive circuit will be described below. The arm rest **14** includes the conventional foam padding **22** and is covered by a thin skin **24** such as vinyl.

An airbag module is housed within the arm rest **14** and comprises a reaction canister **26** in the form of a trough. It is mounted to the arm **18** running along one side of the arm rest by means of threaded studs **28** and nuts **30.** The side of the trough opposite the arm **18** forms an open mouth adjacent the other side of the arm rest. As illustrated in FIG. **6**, the skin **24** of the arm rest covering the mouth of the trough includes tear lines **32, 34**. The tear lines are generally thinned portions of the skin **24** which rupture on inflation of the airbag to form an opening. These lines may or may not be visible to an observer. A cylindrical inflator **36** is housed within the reaction canister **26** and is connected to inflate a folded airbag within the reaction canister when initiated by an impact. The details of the inflator, igniter, and crash sensor are conventional, well known to those skilled in the art, and accordingly are not further described.

When an impact of sufficient magnitude occurs, the inflator **36** is actuated in a conventional manner. The airbag **40** expands, bursting the tear lines **32, 34** to escape into the space between the seat **10** and the door **38** or vehicle side panel or pillar. If the arm rest is in its raised position as illustrated in FIGS. **1** and **2**, it will provide optimal protection to the occupant. However, even if the arm rest is in a lowered position as in FIG. **3**, the airbag **40** will continue to provide protection. It will thus be seen that in this invention, the arm rest will not only create no impediment to the airbag function, but serves to properly position the airbag.

In some installations, it may be desirable to cause the airbag to inflate between the arm rest **14** and the body of the occupant. In that case, the internal structure of the arm rest may be reversed from that illustrated in FIG. **5** such that the airbag will emerge from the pivoted side of the arm rest. With such an arrangement, the airbag **40** would be positioned as shown by the dashed-dotted lines in FIG. **4**.

As explained above, the arm rest may be driven by a motor **M** to rotate automatically when, for example, a door is opened or an ignition switch is turned. One such arrangement is illustrated in FIG. **8**. This circuit employs the door switch **42** which normally energizes a dome light **44** when the door is opened. The coil **46** of a relay is connected across the light. The relay includes a pair of normally closed contacts **461, 462** and a pair of normally open contacts **463, 464.** An upper limit switch **ULS** and a lower limit switch **LLS** are connected to open when the arm rest **14** is, alternatively, in its lowermost and uppermost position. Assuming that the arm rest is initially in its raised, or travel, position, the upper limit switch **ULS** will be closed. However, the door switch **42** will be open so that there is no voltage across either the dome light **44** or the relay coil **46** and there is no circuit through the motor **M**.

If the door is opened, the door switch **42** closes, energizing both the dome light **44** and the relay coil **46**. The normally closed contacts **461, 462** open and the normally open contacts **463, 464** close, completing a circuit through the lower limit switch **LLS** and the motor **M**. The motor rotates to drive the arm rest **14** into its lowered position until the lower limit switch **LLS** opens, breaking the circuit. Simultaneously, the upper limit switch **ULS** closes.

When the door is closed, switch **42** opens, deenergizing the relay coil **46**. The relay contacts return to the illustrated positions and the motor **M** is energized in the opposite direction through contacts **461, 462** and the upper limit switch **ULS**. The motor then raises the arm rest **14** until the upper limit switch opens again.

It is believed that the many advantages of this invention will now be apparent to those skilled in the art. It will also be apparent that a number of variations and modifications may be made therein without departing from its spirit and scope. Accordingly, the foregoing description is to be construed as illustrative only, rather than limiting. This invention is limited only by the scope of the following claims.

## Claims

1. A motor vehicle arm rest (14) which comprises a housing (16, 24) attachable to a seat (10) of the vehicle and adjacent one side of the vehicle and an air bag module (26, 36) mounted within said housing (16, 24) including an air bag deployable, when inflated, into the space between said seat (10) and said vehicle side.

2. The arm rest (14) of claim 1 wherein said housing (16, 24) includes one surface defining a tear line (32, 34) rupturable by said air bag upon inflation.

3. The arm rest (14) of claim 1 or 2 wherein said air bag is deployable into the space between said arm rest (14) and the side of the vehicle.

4. The arm rest (14) of claim 2 and 3 wherein said tear line (32, 34) is positioned in a surface of said housing (16, 24) facing the adjacent side of the vehicle.

5. The arm rest (14) of claim 1 or 2 wherein said air bag is deployable into the space between said arm rest (14) and the occupant of said seat (10).

6. The arm rest (14) of any preceding claim wherein said air bag module comprises a reaction canister (26) enclosing said air bag in its non-inflated state and an inflator (36).

7. The arm rest (14) of any preceding claim wherein said arm rest (14) is rotatable relative to said seat (10) between a travel position and a vehicle exit and entrance position.

8. The arm rest (14) of claim 7 wherein the rotation is automatically initiated through the vehicle's electrical system.

9. The arm rest (14) of any preceding claim in combination with the associated seat (10).
